# EUROPEAN PATENT APPLICATION

(11) **EP 4 277 430 A1**
(43) Date of publication of application: **15.11.2023**
(21) Application number: 22736567.3
(22) Date of filing: 06.01.2022
(51) Int. Cl.: H04W 76/27, H04W 76/00

(54) **DATA SENDING AND PROCESSING METHOD, APPARATUS, AND PROCESSOR-READABLE STORAGE MEDIUM**

(30) Priority: 08.01.2021 CN 202110025454
(71) Applicant: Datang Mobile Communications Equipment Co., Ltd., Beijing 100085 (CN)
(72) Inventor: FU, Jing, Beijing 100085 (CN); MIAO, Jinhua, Beijing 100085 (CN); SUN, Jiancheng, Beijing 100085 (CN); ZENG, Erlin, Beijing 100085 (CN); WORRALL, Chandrika Kumudinie, Beijing 100085 (CN)
(74) Representative: Studio Torta S.p.A.
(86) International application number: PCT/CN2022/070585
(87) International publication number: WO 2022/148405

(57) **Abstract**

A data transmission processing method, a data transmission processing apparatus and a processor-readable storage medium are provided. The method includes: sending small data packets to a network node when the UE is in a Radio Resource Control RRC inactive state; performing a RRC-related process and/or a Non-Access Stratum NAS-related process during sending the small data packets to the network node. The method enable the UE to process subsequent RRC-related processes and/or a NAS- related process in a process of sending the small packets in the RRC inactive state of the UE.

## Description

### TECHNICAL FIELD

This application relates to the technical field of wireless communications, and in particular, to a method of processing data transmission and a method of processing data transmission apparatus, and a processor-readable storage medium.

### BACKGROUND

When a UE (User Equipment) is in an RRC (Radio Resource Control) inactive state (RRC Inactive state) in prior art, if transmission of small data is allowed to be directly performed, it may be avoided that the UE frequently enters an RRC connected state, which can reduce a signaling overhead. However, in a process of sending a plurality of small data packets when the UE is in the RRC inactive state, a subsequent process involved in the transmission of small data is not considered.

### SUMMARY

In view of disadvantages in prior art, the present disclosure provides a method of processing data transmission, an apparatus of processing data transmission, and a processor-readable storage medium, which are used to solve the above-mentioned technical defects.

A first aspect provides a method of processing data transmission, the method being performed by a User Equipment (UE), the method includes: during sending the small data packets to the network node, sending small data packets to a network node when the UE is in a Radio Resource Control (RRC) inactive state; performing a RRC-related process and/or a Non-Access Stratum (NAS)-related process.

Optionally, performing the RRC-related process includes: not initiating a periodic Radio Access Network Notification Area (RNA).

Optionally, performing the RRC-related process during sending the small data packets to the network node includes: during sending the small data packets to the network node, when a Radio Resource Control Connection Resume Request (RRCResumeRequest) message is sent, and/or, when information fed back by an underlying layer of the UE indicates that sending the small data packets to the network node by the UE in the RRC inactive state has succeeded, stopping a timer of the periodic RNA.

Optionally, performing the RRC-related process during sending the small data packets to the network node includes: during sending the small data packets to the network node, when a timer of the periodic RNA expires and a Signaling Radio Bearer (SRB) is recovered, not initiating the periodic RNA, wherein the Signaling Radio Bearer (SRB) includes at least one of SRB1 and SRB2; or, when a timer of the periodic RNA expires, not initiating the periodic RNA.

Optionally, performing the NAS-related process during sending the small data packets to the network node includes: transferring a related indication to a NAS layer of the UE by a RRC layer during sending the small data packets to the network node, wherein the related indication includes one or more of following:
sending the small data packets to the network node in the RRC inactive state;
that a Signaling Radio Bearer 1 (SRB1) is recovered;
that a Signaling Radio Bearer 2 (SRB2) is recovered;
that an air interface connection is recovered.

Optionally, not initiating the periodic RNA is implemented in at least one of the following manners:
when a Radio Resource Control Connection Resume Request (RRCResumeRequest) message is sent and small data packets are sent in the RRC inactive state to the network node, the UE stops a timer of the periodic RNA;
when information fed back by an underlying layer of the UE indicates that sending the small data packets to the network node by the UE in the RRC inactive state has succeeded, the UE stops the timer of the periodic RNA;
when the timer of the periodic RNA expires and at least one of following situations is satisfied, the UE does not initiate the periodic RNA:
   sending the small data packets to the network node in the RRC inactive state;
   sending the small data packets to the network node in the RRC inactive state with the RRC signaling;
   sending the small data packets to the network node in the RRC inactive state without the RRC signaling;
   a signaling radio bearer SRB 1 is recovered;
   a signaling radio bearer SRB 2 is recovered.

Optionally, the Non-Access Stratum (NAS)-related process includes: a RRC layer of the UE transfers a related indication to a NAS layer of the UE, and the related indication includes at least one of the following:
sending the small data packets in the RRC inactive state to the network node;
sending the small data packets in the RRC inactive state to the network node with the RRC signaling;
sending the small data packets in the RRC inactive state to the network node without the RRC signaling;
the SRB 1 is recovered;
the SRB 2 is recovered;
an air interface connection is recovered.

Optionally, after the RRC layer of the UE transfers the related indication to the NAS layer of the UE, when the NAS-related process is executed again, the NAS layer of the UE does not initiate an underlying layer to transition to a Radio Resource Control Connected (RRC_CONNECTED) state.

Optionally, performing the NAS-related process during sending the small data packets to the network node includes: during sending the small data packets to the network node, if an Access Stratum (AS) layer of the UE receives a request or a message sent by the NAS layer and a specified condition is met, performing following:
skipping an access control process;
not initiating a Radio Resource Control Connection Resume (RRC Resume) process;
sending a NAS message by a Signaling Radio Bearer 2 (SRB2);
sending a first message to the network node, wherein the first message indicates that the UE has non-small data packets to send or has a new NAS message to be sent;
wherein, the specified condition includes one or more of following:
   the SRB2 is recovered or established;
   the SRB1 is suspended;
   the SRB 2 is suspended;
   a Data Radio Bearer (DRB) of the non-small data packets is suspended, and
wherein the request sent by the NAS layer includes a request for recovering a suspended RRC connection.

Optionally, the first message includes: at least one of the RRCResumeRequest message, a newly defined RRC message, and a Media Access Control Control Element (MAC CE).

Optionally, performing the NAS-related process includes: performing a corresponding operation when the AS layer receives from the NAS layer the request to recover the suspended RRC connection and at least one of the following conditions is satisfied:
sending the small data packets in the RRC inactive state to the network node;
sending the small data packets in the RRC inactive state to the network node with a RRC Signaling;
sending the small data packets in the RRC inactive state to the network node without a RRC Signaling;
a SRB2 is recovered or established;
a SRB 1 is suspended;
the SRB 2 is suspended;
a Data Radio Bearer DRB of non-small data packets is suspended.

Performing the corresponding operation includes at least one of the following:
skipping an access control process;
not initiating the radio resource control connection resume (RRC Resume) process;
sending the NAS message through the SRB2;
sending a first message to the network node, where the first message includes indication that the UE is to send non-small data packets or is to send a new NAS message.

Optionally, the UE sends the first message to the network node in at least one of the following manners:
a RRCResumeRequest message;
a new RRC message;
a Media Access Control Control Element (MAC CE).

A second aspect provides a method of processing data transmission, the method being performed by a network node, the method includes:
when the network node determines that a User Equipment (UE) is in a process of sending small data packets in a Radio Resource Control (RRC) inactive state, stopping a timer of a periodic Radio Access Network Notification Area (RNA); or
receiving a second message sent by the UE, wherein the second message includes an indication that the UE is to send non-small data packets or is to send a new Non-Access Stratum (NAS) message; and sending a response message to the UE.

Optionally, the network node determines that the UE is in the process of sending the small data packets in the RRC inactive state, in at least one of following manners:
receiving the small data packets sent by the UE;
receiving the small data packets sent by the UE on a pre-configured resource;
receiving an RRC establishment cause or an RRC recovery cause sent by the UE, the cause being the small data packets;
receiving an indication sent by a network node current serving the UE, wherein the indication indicates that the UE sends the small data packets in the RRC inactive state.

Optionally, the response message is configured to enable the UE to transition to an RRC connected state or to recover a Signaling Radio Bearer 2 (SRB2).

A third aspect provides an apparatus of processing data transmission, applied to a User Equipment (UE), the apparatus includes:
a memory, a transceiver, and a processor, wherein the memory is configured to store a computer program, the transceiver is configured to send and receive data under control of the processor; and the processor is configured to read the computer program in the memory and execute following:
sending small data packets to a network node when the UE is in a Radio Resource Control (RRC) inactive state;
performing a RRC-related process and/or a Non-Access Stratum (NAS)-related process during sending the small data packets to the network node.

Optionally, performing the RRC-related process includes: not initiating a periodic Radio Access Network Notification Area (RNA).

Optionally, performing the RRC-related process during sending the small data packets to the network node includes: during sending the small data packets to the network node, when a Radio Resource Control Connection Resume Request (RRCResumeRequest) message is sent, and/or, when information fed back by an underlying layer of the UE indicates that sending the small data packets to the network node by the UE in the RRC inactive state has succeeded, stopping a timer of the periodic RNA.

Optionally, performing the RRC-related process during sending the small data packets to the network node includes: during sending the small data packets to the network node, when a timer of the periodic RNA expires and a Signaling Radio Bearer (SRB) is recovered, not initiating the periodic RNA, wherein the Signaling Radio Bearer (SRB) includes at least one of SRB1 and SRB2; or, when a timer of the periodic RNA expires, not initiating the periodic RNA.

Optionally, performing the NAS-related process during sending the small data packets to the network node includes: transferring a related indication to a NAS layer of the UE by a RRC layer during sending the small data packets to the network node, wherein the related indication includes one or more of following:
sending the small data packets to the network node in the RRC inactive state; that a Signaling Radio Bearer 1 (SRB1) is recovered;
that a Signaling Radio Bearer 2 (SRB2) is recovered;
that an air interface connection is recovered.

Optionally, not initiating the periodic RNA is implemented in at least one of the following manners:
when a Radio Resource Control Connection Resume Request (RRCResumeRequest) message is sent and small data packets are sent in the RRC inactive state to the network node, the UE stops a timer of the periodic RNA;
when information fed back by an underlying layer of the UE indicates that sending the small data packets to the network node by the UE in the RRC inactive state has succeeded, the UE stops the timer of the periodic RNA;
when the timer of the periodic RNA expires and at least one of following situations is satisfied, the UE does not initiate the periodic RNA:
   sending the small data packets to the network node in the RRC inactive state;
   sending the small data packets to the network node in the RRC inactive state with the RRC signaling;
   sending the small data packets to the network node in the RRC inactive state without the RRC signaling;
   a signaling radio bearer SRB 1 is recovered;
   a signaling radio bearer SRB 2 is recovered.

Optionally, the Non-Access Stratum (NAS)-related process includes: a RRC layer of the UE transfers a related indication to a NAS layer of the UE, and the related indication includes at least one of the following:
sending the small data packets in the RRC inactive state to the network node;
sending the small data packets in the RRC inactive state to the network node with the RRC signaling;
sending the small data packets in the RRC inactive state to the network node without the RRC signaling;
the SRB 1 is recovered;
the SRB 2 is recovered;
an air interface connection is recovered.

Optionally, after the RRC layer of the UE transfers the related indication to the NAS layer of the UE, when the NAS-related process is executed again, the NAS layer of the UE does not initiate an underlying layer to transition to a Radio Resource Control Connected (RRC_CONNECTED) state.

Optionally, performing the NAS-related process during sending the small data packets to the network node includes: during sending the small data packets to the network node, if an Access Stratum (AS) layer of the UE receives a request or a message sent by the NAS layer and a specified condition is met, performing following:
skipping an access control process;
not initiating a Radio Resource Control Connection Resume (RRC Resume) process;
sending a NAS message by a Signaling Radio Bearer 2 (SRB2);
sending a first message to the network node, wherein the first message indicates that the UE has non-small data packets to send or has a new NAS message to be sent;
wherein, the specified condition includes one or more of following:
   the SRB2 is recovered or established;
   the SRB1 is suspended;
   the SRB 2 is suspended;
   a Data Radio Bearer (DRB) of the non-small data packets is suspended; and
wherein a request sent by the NAS layer includes a request of recovering a suspended RRC connection.

Optionally, the first message includes: at least one of the RRCResumeRequest message, a newly defined RRC message, and a Media Access Control Control Element (MAC CE).

Optionally, performing the NAS-related process includes: performing a corresponding operation when the AS layer receives from the NAS layer a request to recover a suspended RRC connection and at least one of the following conditions is satisfied:
sending the small data packets in the RRC inactive state to the network node;
sending the small data packets in the RRC inactive state to the network node with a RRC Signaling;
sending the small data packets in the RRC inactive state to the network node without a RRC Signaling;
the SRB2 is recovered or established;
the SRB 1 is suspended;
the SRB2 is suspended;
a Data Radio Bearer DRB of non-small data packets is suspended.

Performing the corresponding operation includes at least one of the following:
skipping an access control process;
not initiating the radio resource control connection resume (RRC Resume) process;
sending the NAS message through the SRB2;
sending a first message to the network node, where the first message includes indication that the UE is to send non-small data packets or is to send a new NAS message.

Optionally, the UE sends the first message to the network node in at least one of the following manners:
a RRCResumeRequest message;
a new RRC message;
a Media Access Control Control Element (MAC CE).

A fourth aspect provides an apparatus of processing data transmission, applied to a network node, the apparatus includes: a memory, a transceiver, and a processor, wherein the memory is configured to store a computer program, the transceiver is configured to send and receive data under control of the processor; and the processor is configured to read the computer program in the memory and execute following:
when the network node determines that a User Equipment (UE) is in a process of sending small data packets in a Radio Resource Control (RRC) inactive state, stopping a timer of a periodic Radio Access Network Notification Area (RNA); or
receiving a second message sent by the UE, wherein the second message includes an indication that the UE is to send non-small data packets or is to send a new Non-Access Stratum (NAS) message; and sending a response message to the UE.

Optionally, the network node determines that the UE is in the process of sending the small data packets in the RRC inactive state, in at least one of following manners:
receiving the small data packets sent by the UE;
receiving the small data packets sent by the UE on a pre-configured resource;
receiving an RRC establishment cause or an RRC recovery cause sent by the UE, the cause being the small data packets;
receiving an indication sent by a network node current serving the UE, wherein the indication indicates that the UE sends the small data packets in the RRC inactive state.

Optionally, the response message is configured to enable the UE to transition to an RRC connected state or to recover a Signaling Radio Bearer 2 (SRB2).

A fifth aspect provides an apparatus of processing data transmission, applied to a User Equipment (UE), the apparatus includes: a first processing unit, configured to send small data packets to a network node when the UE is in a Radio Resource Control (RRC) inactive state; and a second processing unit, configured to perform a RRC-related process and/or a Non-Access Stratum (NAS)-related process during sending the small data packets to the network node.

A sixth aspect provides an apparatus of processing data transmission, applied to a network node, the apparatus includes: a third processing unit, configured to, when the network node determines that a User Equipment (UE) is in a process of sending small data packets in a Radio Resource Control (RRC) inactive state, stop a timer of a periodic Radio Access Network Notification Area (RNA); or a third processing unit, configured to receive a second message sent by the UE, wherein the second message includes an indication that the UE is to send non-small data packets or is to send a new Non-Access Stratum (NAS) message; and send a response message to the UE.

A seventh aspect provides a processor-readable storage medium, wherein the processor-readable storage medium stores a computer program, and the computer program is configured to cause a processor to execute the method according to the first aspect or the second aspect.

The technical solutions provided in the present disclosure at least have the following beneficial effects: the UE processes the subsequent RRC-related process and/or the NAS-related process in the process of sending the small data in the inactive state of the UE.

Additional aspects and advantages of the present disclosure will be given in part in the following description, which will become apparent from the following description, or be learned through practice of the present disclosure.

### BRIEF DESCRIPTION OF THE DRAWINGS

In order to more clearly illustrate the technical solutions in the embodiments of the present disclosure, the accompanying drawings that need to be used in the description of the embodiments of the present disclosure are briefly described below.
FIG. 1 is a schematic diagram of a system architecture according to some embodiments of the present disclosure;
FIG. 2 is a schematic flowchart of a method of processing data transmission according to some embodiments of the present disclosure;
FIG. 3 is a schematic flowchart of another method of processing data transmission according to some embodiments of the present disclosure;
FIG. 4 is a schematic structural diagram of an apparatus of processing data transmission according to some embodiments of the present disclosure;
FIG. 5 is a schematic structural diagram of another apparatus of processing data transmission according to some embodiments of the present disclosure;
FIG. 6 is a schematic structural diagram of an apparatus of processing data transmission according to some embodiments of the present disclosure;
FIG. 7 is a schematic structural diagram of another apparatus of processing data transmission according to some embodiments of the present disclosure.

### DETAILED DESCRIPTION

Embodiments of the present disclosure are described in detail below. Examples of the embodiments are shown in the accompanying drawings, wherein the same or similar reference numerals are used to refer to the same or similar elements or elements having the same or similar functions. The embodiments described below with reference to the drawings are exemplary, and are only used to explain the present disclosure, but cannot be construed as limiting the present disclosure.

Those skilled in the art will appreciate that singular forms "a", "an", and "the" as used herein may also include plural forms, unless specifically stated. It should be further understood that phraseology "comprising" or "including" used in the specification of the present disclosure refers to presence of features, integers, steps, operations, elements and/or components, but does not preclude presence or addition of one or more other features, integers, steps, operations, elements, components, and/or groups thereof. It should be understood that when an element is referred to as being "connected" or "coupled" to another element, the element may be directly connected or coupled to other elements, or intervening elements may also be present. In addition, "connected" or "coupled" used herein may include a wireless connection or a wireless coupling. The term "and/or" as used herein includes all or any unit and all combinations of one or more of associated listed items.

In this embodiment of the present disclosure, the term "and/or" describes association relationship of associated objects, and indicates that there may be three relationships, for example, A and/or B may indicate that A exists alone, A and B exist at the same time, and B exists alone. Such character "/" generally indicates that the associated objects have the "or" relationship. In this embodiment of the present disclosure, such term as "a plurality of" means two or more, and other quantifiers are similar to this term.

In order to better understand and explain solutions of the embodiments of the present disclosure, some technical terms involved in the embodiments of the present disclosure are briefly described below.

### (1) Inactive State

In order to enable a UE to quickly enter a connected state to send data and in order that a signaling overhead caused in a moving process and a state transition process is reduced, a new RRC state controlled by an RAN, that is, an RRC inactive state, is introduced into a NR.

In the RRC inactive state, a non-access stratum state of the UE is still kept in the connected state, but an air interface connection corresponding to an access layer of the UE is temporarily suspended, and the UE can move inside an RAN-side notification area (RNA, a RAN-based Notification Area) as in an idle state. During this duration, the UE:
saving a UE context before the UE enters the RRC inactive state;
monitoring a paging;
performing measurement and cell reselection;
periodically updating the RNA, or updating the RNA updates when moving out of the RNA.

Both the UE side and the RAN side store the UE context before the RRC inactive state, thereby enabling the UE to quickly enter the connected state. Mobility management of the UE in the inactive state is implemented by cell reselection, and signaling interaction (such as, measurement reporting, switching, etc.) overhead caused by the UE in the moving process is also reduced.

In order to ensure timeliness of location information of the UE in the inactive state stored in an anchor gNB, a periodic RNA update mechanism is introduced into design of the RRC inactive state. When entering the inactive state, the UE starts a periodic RNA update timer corresponding to T380 in TS 38.331. If the timer expires, the UE initiates the RNA update process. In addition, when the UE moves outside the RNA configured by a network node, the UE also initiates the RNA update process to inform the anchor gNB that the previously configured RNA is no longer effective.

### (2) Small Data Transmission

Small data transmission in the inactive state is currently discussed in NR, and includes small data transmission with a RRC signaling, and small data transmission without a RRC Signaling (i.e., w/o RRC signaling).

The small data transmission without a RRC Signaling is that a RRCResumeRequest message is sent to a network node together with small data packets to be transmitted, and a subsequent process is initiated.

The small data transmission without the RRC Signaling is that an additional RRC message is not carried when the UE transmits to-be-transmitted UL small data packets for the first time.

The technical solutions in the embodiments of the present disclosure will be clearly and completely described below with reference to the accompanying drawings in the embodiments of the present disclosure, and obviously, the described embodiments are merely some embodiments of the present disclosure, and are not all embodiments. All other embodiments obtained by a person of ordinary skill in the art based on the embodiments of the present disclosure without creative efforts shall fall within the protection scope of the present disclosure.

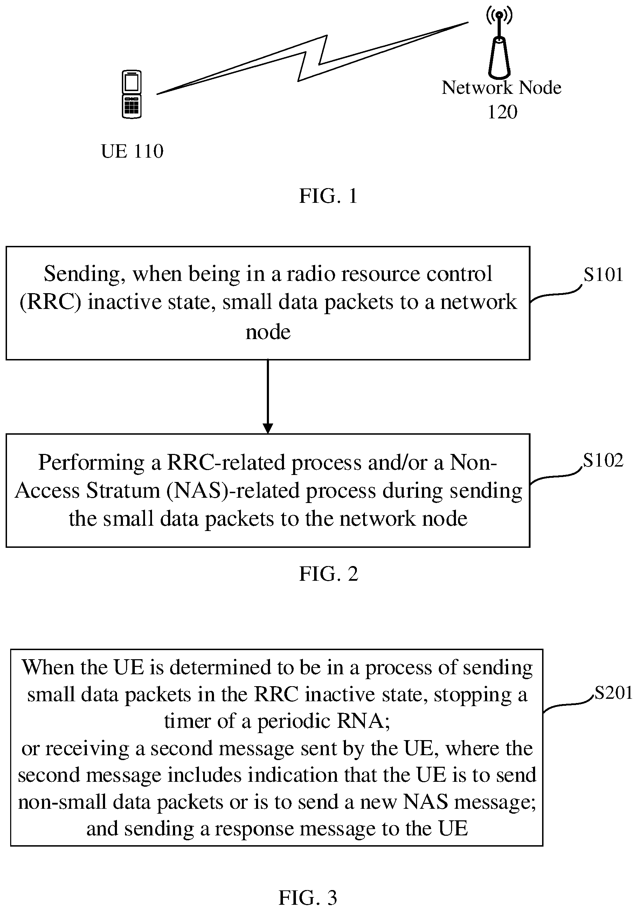

A schematic diagram of a network architecture provided in this embodiment of the present disclosure is shown in FIG. 1, where the network architecture includes: a UE and a network node, where the UE is, for example, a UE 110 in FIG. 1, and the network node is a network node 120 in FIG. 1. The network node is deployed in an access network, for example, the network node 120 in FIG. 1 is deployed in an access network, for example, the network node 120 is deployed in an access network NG-RAN (New Generation-Radio Access Network) in a 5G system. The UE and the network node communicate with each other by means of some air interface technology, for example, may communicate with each other by means of cellular technology.

The UE involved in this embodiment of the present disclosure may be a device that provides voice and/or data connectivity to a user, a handheld device having a wireless connection function, or other processing devices connected to a wireless modem. The type of the UE includes a mobile phone, a user terminal, a tablet computer, a laptop computer, a personal digital assistant, a mobile internet access device, a wearable device, etc.

The network node in this embodiment of the present disclosure may be a base station, and the base station may include a plurality of cells that provide services for the UE. According to different specific application occasions, the base station may also be referred to as an access point, or may be a device, in an access network, that communicates with the UE through one or more sectors on an air interface, or the like. The network node may be used to transform a received air frame to Internet Protocol (IP) packets or vice versa, as a router between the UE and remainder of the access network, wherein the remainder of the access network may include an Internet Protocol (IP) communication network. The network node may also coordinate attribute management of the air interface. For example, the network node in this embodiment of the present disclosure may be a network device (Base Transceiver Station, BTS) in a Global System for Mobile Communications (GSM) or Code Division Multiple Access (CDMA), or may be a network device in a Wide-Band Code Division Multiple Access (WCDMA), or may be an evolved network device (evolutional Node B, eNB or e-NodeB) in a Long Term Evolution (LTE) system, or may be a 5G base station (gNB) in a 5G network architecture (next generation system), or may be a Home evolved Node B (HeNB), a relay node, a home base station (femto), a pico station, etc., which is not limited in the embodiments of the present disclosure. In some network structures, the network node may include a centralized unit (CU) node and a distributed unit (DU) node, and the centralized unit and the distributed unit may also be geographically separated.

In order to make objectives, technical solutions, and advantages of the present disclosure clearer, the embodiments of the present disclosure will be further described in detail below with reference to the accompanying drawings.

Embodiments of the present disclosure provide a method of processing data transmission, which is executed by a UE, and a schematic flowchart of the method is shown in FIG. 2, and the method includes steps S101-S102.

Step S 101: sending, when being in a radio resource control (RRC) inactive state, small data packets to a network node.

In one embodiment, in the process of transmitting small data by the UE in the inactive state (RRC inactive state), the UE processes a subsequent RRC-related process and/or a Non-Access Stratum (NAS)-related process, wherein both the RRC-related process and the NAS-related process are subsequent processes of processing small data transmission.

Step S102: in the process of sending the small data packets to the network node, performing the RRC-related process and/or the Non-Access Stratum (NAS)-related process.

In one embodiment, performing the RRC-related process includes: not initiating a periodic radio access network notification area (RNA).

In one embodiment, processing a subsequent RRC-related process by the UE includes not initiating the periodic RNA.

In one embodiment, not initiating the periodic RNA is implemented in at least one of the following manners:
when a radio resource control connection resume request RRCResumeRequest message is sent and small data packets are sent in the RRC inactive state to the network node, the UE stops a timer of the periodic RNA;
when information fed back by an underlying layer of the UE indicates that a process of sending the small data packets to the network node by the UE in the RRC inactive state has succeeded, the UE stops the timer of the periodic RNA;
when the timer of the periodic RNA expires and at least one of following situations is satisfied, the UE does not initiate the periodic RNA:
   in the RRC inactive state, sending small data packets to the network node;
   in the RRC inactive state, sending small data packets to the network node with the RRC signaling;
   in the RRC inactive state, sending small data packets to the network node without the RRC signaling;
   a signaling radio bearer SRB 1 is recovered;
   a signaling radio bearer SRB 2 is recovered.

In an embodiment, the Non-Access Stratum (NAS)-related process includes: a RRC layer of the UE transfers a related indication to a NAS layer of the UE, and the related indication includes at least one of the following:
in the RRC inactive state, sending small data packets to the network node;
in the RRC inactive state, sending small data packets to the network node with the RRC signaling;
in the RRC inactive state, sending small data packets to the network node without the RRC signaling;
the SRB 1 is recovered;
the SRB 2 is recovered;
an air interface connection is recovered.

In one embodiment, the RRC layer of the UE informs the related indication to the NAS layer of the UE, and the related indication includes at least one of the following:
being in an ongoing process of transmitting small data in the inactive state;
being in a process of transmitting small data in the inactive state with the RRC Signaling;
being in the process of transmitting small data in the inactive state without the RRC Signaling;
the SRB 1 is recovered;
the SRB 2 is recovered;
an air interface connection is recovered.

In one embodiment, after the RRC layer of the UE transfers the related indication to the NAS layer of the UE, when the NAS-related process is executed again, the NAS layer no longer initiates the underlying layer to transition to the radio resource control connected RRC_CONNECTED state.

In one embodiment, the NAS message to be transmitted is directly transferred to the Access Stratum (AS) layer.

In one embodiment, performing the NAS-related process includes: performing a corresponding operation when the AS layer receives from the NAS layer a request to recover a suspended RRC connection and at least one of the following conditions is satisfied:
transmitting small data packets in the RRC inactive state to the network node;
transmitting small data packets in the RRC inactive state to the network node with the RRC Signaling;
transmitting small data packets in the RRC inactive state to the network node without the RRC Signaling;
the SRB2 is recovered or established;
the SRB 1 is suspended;
the SRB 2 is suspended;
a Data Radio Bearer DRB of non-small data packets is suspended.

Performing the corresponding operation includes at least one of the following:
skipping an access control process;
not initiating the radio resource control connection resume (RRC Resume) process;
sending the NAS message through the SRB2;
sending a first message to the network node, where the first message includes indication that the UE is to send non-small data packets or is to send a new NAS message.

In an embodiment, the UE sends the first message to the network node in at least one of the following manners:
a RRCResumeRequest message;
a new RRC message;
a Media Access Control Control Element (MAC CE).

In one embodiment, when the AS layer receives from the NAS layer the request to recover the suspended RRC connection and one or more of the following conditions are found:
the UE being in an ongoing process of transmitting small data in the inactive state;
the UE being in a process of transmitting small data in the inactive state with the RRC Signaling;
the UE being in the process of transmitting small data in the inactive state without the RRC Signaling;
the SRB2 is recovered or established;
the UE may perform one or more of following operations:
skipping an access control process (i.e., access is allowed);
not initiating an RRC Resume process;
sending a NAS message using the SRB2 directly, for example, sending the NAS message directly through a ULInformationTransfer message.

In one embodiment, when the AS layer receives from the NAS layer the request to recover the suspended RRC connection and one or more of the following conditions are found:
the UE being in an ongoing process of transmitting small data in the inactive state;
the UE being in a process of transmitting small data in the inactive state with the RRC Signaling;
the UE being in the process of transmitting small data in the inactive state without the RRC Signaling;
the SRB 1 is being suspended;
the SRB2 is being suspended;
the DRB of non-small data packets is being suspended;
the UE may perform one or more of the following operations:
skipping an access control process (i.e., access is allowed);
not initiating the RRC Resume process;
the UE informs to the network node that the UE is to send non-small data packets in the process of sending the small data packets in the inactive state; the LTE may informs to the network node through the RRCResumeRequest message or one new RRC message, through a MAC CE;
the UE may further informs to the network node whether the UE is to send a new NAS message or is to send non-small data packets.

In this embodiment of the present disclosure, the UE processes the subsequent RRC-related process and/or the NAS-related process in the process of sending the small data in the RRC inactive state.

Embodiments of the present disclosure provide a method of processing data transmission, which is executed by a network node, and a schematic flowchart of the method is shown in FIG. 3, and the method includes a step S201.

Step S201: when the UE is determined to be in a process of sending small data packets in the RRC inactive state, stopping a timer of a periodic RNA; or receiving a second message sent by the UE, where the second message includes indication that the UE is to send non-small data packets or is to send a new NAS message; and sending a response message to the UE.

In an embodiment, determining, by the network node using at least one of the following manners, that the UE is in a process of sending small data packets in the RRC inactive state, includes:
receiving small data packets sent by the LTE;
receiving small data packets sent by the UE on a pre-configured resource;
receiving an RRC establishment cause or an RRC recovery cause sent by the UE, the cause is a small data packet;
receiving an indication sent by a network node current serving the UE, wherein the indication indicates that the UE sends the small data packets in the RRC inactive state.

In one embodiment, the network node stops the periodic RNA timer if it is found that the UE is in the processing of transmitting small data in the inactive state.

In one embodiment, the network node receives an indication from the UE, and the UE informs the network node that the UE is currently in the process of sending the small data packets in the inactive state, the UE has non-small data packets to send.

In one embodiment, the UE may inform the network node whether the UE has a new NAS message to send or non-small data packets to send.

In one embodiment, the response message is used to transition the UE to an RRC connected state or is used to recover the SRB2

A resource configuration method of the embodiments of the present disclosure is described in detail through the following embodiments:

**A first aspect of the present disclosure is periodic RNA-related process.**

**In one embodiment of the present disclosure:**
In the process of sending small data in the inactive state (with the RRC Signaling), the UE in the inactive state initiates a small data transmission process, that is, the UE is in the RRC inactive state, and in the process of sending the small data, the UE sends the RRCResumeRequest and the UL small data to the network node at the same time, and in this condition, since the UE has an air interface connection with the network node, the periodic RNA may not be needed, and therefore, a possible processing manner for the periodic RNA at this time is below:
when sending the RRCResumeRequest message, if the small data is sent in the inactive state, the UE stops the timer T380 of the periodic RNA;
if the underlying layer feeds back that the RRCResumeRequest or a first small data packet or information transmitted on a first UL-SCH has been successfully transmitted to the network node, then the UE stops the timer T380 of the periodic RNA.

When the T380 has expired, if one or more of the following conditions are satisfied, the UE does not initiate the periodic RNA:
the UE being in a process of transmitting small data in the inactive state;
the UE being in a process of transmitting small data in the inactive state with the RRC Signaling;
the SRB2 (signaling radio bearers 2) are recovered, wherein recovery of the SRB2 may be considered as a step needing to be performed in the process of sending small data in the inactive state, or a step needing to be performed in the process of sending small data in the inactive state with the RRC signaling.

In this way, unnecessary periodic RNA can be avoided.

**In another embodiment of the present disclosure:**
In the process of sending small data in the inactive state (without the RRC Signaling), the UE in the inactive state initiates the small data transmission process to send the small data packets (no RRCResumeRequest message is included therein) to the network node, a possible processing manner for the periodic RNA at this time is below:
when sending the RRCResumeRequest message, if the small data is sent in the inactive state, the UE stops the timer T380 of the periodic RNA;
if the underlying layer feeds back that the RRCResumeRequest or a first small data packet or information transmitted on a first UL-SCH has been successfully transmitted to the network node, then the UE stops the timer T380 of the periodic RNA.

When the T380 has expired, if one or more of the following conditions are satisfied, the UE does not initiate the periodic RNA:
the UE being in a process of transmitting small data in the inactive state;
the UE being in a process of transmitting small data in the inactive state with the RRC Signaling;
the SRB 1 is recovered;
the SRB2 is recovered.

It should be noted that the process of sending small data in the inactive state without the RRC signaling may recover the SRB 1 or the SRB2.

In this way, unnecessary periodic RNA can be avoided.

**In yet another embodiment of the present disclosure:**
Processing of periodic RNA by the network node, the network node also starts a corresponding periodic RNA timer for the inactive UE, to assist a NG-RAN side node to perform a related operation on the inactive UE, for example, after the RNA timer expires, the network node may release the UE.

If the network node finds an ongoing small data transmission process in the inactive state, the network node stops the periodic RNA timer.

The network node finds the ongoing small data transmission process in the inactive state in one or more of the following ways:
receiving, by the network node, a small data packet sent by the UE in the inactive state;
receiving, by the network node, small data packets sent by the UE in the inactive state on a pre-configured resource;
receiving an establishment cause or a recovery cause which is specifically is a small data packet.

The network node may be a serving NG-RAN side node currently connected to the UE in the inactive state, or may be an anchor node, that is, the NG-RAN side node when the UE is released to enter the inactive state.

Another way is that the anchor node receives an indication sent by a serving NG-RAN side node currently connected to the UE, the indication indicates that the UE sends a small data packet in the inactive state, and in this way, the anchor node finds that the UE is performing the small data transmission process in the inactive state, thereby stopping the periodic RNA timer.

In the above way, the network node may stop the periodic RNA timer in time to avoid unnecessary operations or error operations caused by timeout of the periodic RNA timer, for example, after the RNA timer expires, the network node may release the UE.

**A second aspect of the present disclosure is the NAS-related process.**

**In one embodiment of the present disclosure:**
In a process of sending small data in the inactive state (with the RRC Signaling), the UE in the inactive state initiates a small data transmission process, and sends the RRCResumeRequest and UL small data to the network node simultaneously and if the NAS layer initiates a related process (such as PDU session modification, etc.), a possible processing manner at this time includes:

1) when sending the RRCResumeRequest message, if the small data is sent in the inactive state, then the RRC layer of the UE informs the NAS layer of the related indication which may be one of the following:
being in an ongoing process of transmitting small data in the inactive state;
being in a process of transmitting small data in the inactive state with the RRC Signaling;
the SRB 1 is recovered;
the SRB 2 is recovered;
the air interface connection is recovered.

The indication may be informed to the NAS layer by the RRC layer at the beginning of initiating sending the small data in the inactive state or after the small data has been successfully transmitted to the network node by the underlying layer in the inactive state.

After the NAS layer receives the indication, if the NAS-related process is initiated again, the NAS layer does not need to initiate the underlying layer (i.e., the AS layer) to transition to the RRC_CONNECTED state.

2) When the NAS layer initiates a related process (such as PDU session modification, etc.), the NAS layer finds that the UE is in a 5GMM-CONNECTED mode with RRC inactive indication over 3GPP access. The NAS layer initiates the underlying layer (i.e., the AS layer) to transition to the RRC_CONNECTED state.

When the AS layer receives from the NAS layer a request to recover a suspended RRC connection and at least one of the following conditions is satisfied:
the UE being in an ongoing process of transmitting small data in the inactive state;
the UE being in a process of transmitting small data in the inactive state with the RRC Signaling;
the SRB2 is recovered or established;
the UE may perform one or more of following operations:
skipping an access control process (i.e., access is allowed);
not initiating an RRC Resume process;
sending a NAS message using the SRB2 directly, for example, sending the NAS message directly through a ULInformationTransfer message.

In this way, some unnecessary operations may be avoided, for example, the access control process is skipped, and the RRC resume process is not initiated; and the SRB2 is directly used to send the NAS message.

3) When the NAS layer initiates a related process (such as PDU Session modification, or there is pending UL data, etc.), it is found that the UE is in the 5GMM-CONNECTED mode with RRC inactive indication over 3 GPP Access. The NAS layer initiates the underlying layer (i.e., the AS layer) to transition to the RRC_CONNECTED state. When the AS layer receives from the NAS layer the request to recover the suspended RRC connection and one or more of the following conditions are found:
the UE being in an ongoing process of transmitting small data in the inactive state;
the UE being in a process of transmitting small data in the inactive state with the RRC Signaling;
the SRB2 is being suspended;
the DRB of non-small data packets is being suspended;
the UE may perform one or more of the following operations:
skipping an access control process (i.e., access is allowed);
not initiating the RRC Resume process;
informing to the network node that the UE is to send non-small data packets currently in the process of sending the small data packets in the inactive state; wherein the network node may inform to the UE through the RRCResumeRequest message or one new RRC message, through a MAC CE;
further informing to the network node whether the UE is to send a new NAS message or is to send non-small data packets.

The network node may perform a related operation based on the information sent by the UE, for example, the network node finds that in the current process of sending the small data packets in the inactive state, the UE has the non-small data packets to send, then the network node sends a message to the UE to transition the UE to the RRC connected state; or the network node finds that in the current process of sending the small data packets in the inactive state, the UE has a new NAS message to send, then the network node recovers the SRB2 and notifies the UE through signaling to recover the SRB2; or the network node finds that in the current process of sending the small data packets in the inactive state, the UE has the non-small data packets to be sent, and the network node sends a message to the UE to transition the UE to the RRC connected state.

**In another embodiment of the present disclosure:**
In a process of sending the small data in the inactive state without the RRC signaling, the UE in the inactive state initiates a process of transmitting small data and sends small data packets (which do not include an RRCResumeRequest message) to the network node, and when the process is not completed subsequently, if the NAS layer initiates a related process (such as PDU session modification, etc.), a possible processing manner at this time includes:
1) if the small data is sent in the inactive state, the RRC layer of the UE informs the NAS layer of the related indication which may include one of the following:
   being in a process of transmitting small data in the inactive state;
   being in a process of transmitting small data in the inactive state without the RRC Signaling;
   the SRB 1 is recovered;
   the SRB2 is recovered,

The indication may be informed to the NAS layer by the RRC layer at the beginning of initiate transmission of the small data in the inactive state, or after the underlying layer feeds back that the small data has been successfully transmitted in the inactive state to the network node.

After the NAS layer receives the indication, if the NAS-related process is initiated again, then the NAS layer does not need to trigger the underlying layer (i.e., the AS layer) to transition to the RRC_CONNECTED state.

2) When the NAS layer initiates a related process (such as PDU session modification, etc.), it is found that the UE is in the 5GMM-CONNECTED mode with RRC inactive indication over 3GPP access. The NAS layer initiates the underlying layer (i.e., the AS layer) to transition to the RRC_CONNECTED state.

When the AS layer receives from the NAS layer the request to recover a suspended RRC connection and it is found that the UE is currently in the process of sending the small data in the inactive state or is currently in the process of sending the small data in the inactive state without the RRC signaling, the UE may perform one or more of the following operations:
skipping an access control process (i.e., access is allowed);
initiating the RRC Resume process;
sending the NAS message through the SRB2; wherein only one of initiating the RRC Resume process and sending the NAS message through the SRB2 is selected.

In this way, some unnecessary operations can be avoided.

3) When the NAS layer initiates a related process (such as PDU Session modification, or there is pending UL data, etc.), it is found that the UE is in a 5GMM-CONNECTED mode with RRC inactive indication over 3GPP access. The NAS layer initiates the underlying layer (i.e., the AS layer) to transition to the RRC_CONNECTED state.

When the AS layer receives from the NAS layer the request to recover the suspended RRC connection and one or more of the following conditions are found:
the UE being in an ongoing process of transmitting small data in the inactive state;
being in a process of transmitting small data in the inactive state without the RRC Signaling;
the SRB1 is being suspended;
the SRB2 is being suspended;
the DRB of non-small data packets is being suspended;
the UE may perform one or more of the following operations:
skipping an access control process (i.e., access is allowed);
not initiating the RRC Resume process;
informing to the network node that the UE is to send the non-small data packets in the current process of sending the small data packets in the inactive state; wherein the network node may inform to the UE through the RRCResumeRequest message or one new RRC message, through a MAC CE;
further informing to the network node whether the UE is to send a new NAS message or is to send non-small data packets.

The network node may perform a related operation based on the information sent by the UE, for example, the network node finds that in the current process of sending the small data packets in the inactive state, the UE has the non-small data packets to send, then the network node sends a message to the UE to transition the UE to the RRC connected state; or the network node finds that in the current process of sending the small data packets in the inactive state, the UE has a new NAS message to send, then the network node recovers the SRB 1 and/or the SRB2 and notifies the UE through signaling to recover the SRB 1 and/or the SRB2; or the network node finds that in the current process of sending the small data packets in the inactive state, the UE has the non-small data packets to be sent, and the network node sends a message to the UE to transition the UE to the RRC connected state.

The technical solutions provided in the embodiments of the present disclosure has at least the following beneficial effects:
In the embodiments of the present disclosure, the UE processes the subsequent RRC-related process and/or the NAS-related process in the process of sending the small data in the RRC inactive state.

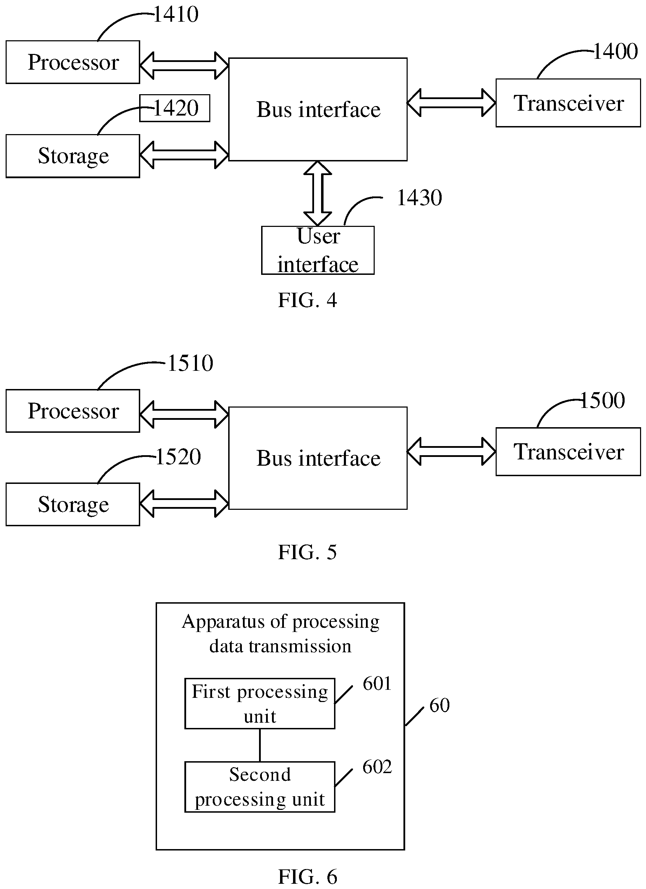

Based on the same inventive concept, an embodiment of the present disclosure further provides an apparatus of processing data transmission, which is applied to a UE, a schematic structural diagram of the apparatus is shown in FIG. 4, and a transceiver 1400 is configured to receive and send data under the control of a processor 1410.

In FIG. 4, a bus architecture may include any number of interconnected buses and bridges. Specifically various circuits such as one or more processors represented by the processor 1410 and a memory represented by the memory 1420 are linked together. The bus architecture may also link together various other circuits, such as peripheral devices, voltage regulators, and power management circuits, etc. which are well known in the art, and therefore are not further described herein. The bus interface provides an interface. The transceiver 1400 may be a plurality of elements, i.e., include a transmitter and a receiver, and provide units for communicating with various other devices on a transmission medium. The transmission medium includes transmission media such as a wireless channel, a wired channel, and an optical cable. For different user equipment, a user interface 1430 may also be an interface that can be externally or internally connected to a required device, and the connected device includes, but is not limited to, a keypad, a display, a speaker, a microphone, a joystick, etc.

The processor 1410 is responsible for managing the bus architecture and general processing, and the memory 1420 may store data used by the processor 1410 when performing an operation.

Optionally, the processor 1410 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.

The processor is configured to, by invoking a computer program stored in the memory, perform the method according to the first aspect provided in the embodiments of the present disclosure according to an obtained executable instruction. The processor and the memory may also be physically separately arranged.

The processor 1410 is configured to read the computer program in the memory 1420 and perform the following operations:
sending, when being in a radio resource control (RRC) inactive state, small data packets to a network node;
performing a RRC-related process and/or a Non-Access Stratum (NAS)-related process in a process of sending the small data packets to the network node.

In one embodiment, performing the RRC-related process includes: not initiating a periodic Radio Access Network Notification Area (RNA).

In one embodiment, not initiating the periodic RNA is implemented in at least one of the following manners:
when a radio resource control connection resume request RRCResumeRequest message is sent and small data packets are sent in the RRC inactive state to the network node, the UE stops a timer of the periodic RNA;
when information fed back by an underlying layer of the UE indicates that a process of sending the small data packets to the network node by the UE in the RRC inactive state has succeeded, the UE stops the timer of the periodic RNA;
when the timer of the periodic RNA expires and at least one of following situations is satisfied, the UE does not trigger the periodic RNA:
   in the RRC inactive state, sending small data packets to the network node;
   in the RRC inactive state, sending small data packets to the network node with the RRC signaling;
   in the RRC inactive state, sending small data packets to the network node without the RRC signaling;
   a signaling radio bearer SRB 1 is recovered;
   a signaling radio bearer SRB 2 is recovered.

In an embodiment, the Non-Access Stratum (NAS)-related process includes: a RRC layer of the UE transfers a related indication to a NAS layer of the UE, and the related indication includes at least one of the following:
in the RRC inactive state, sending small data packets to the network node;
in the RRC inactive state, sending small data packets to the network node with the RRC signaling;
in the RRC inactive state, sending small data packets to the network node without the RRC signaling;
the SRB 1 is recovered;
the SRB 2 is recovered;
an air interface connection is recovered.

In one embodiment, after the RRC layer of the UE transfers the related indication to the NAS layer of the UE, when the NAS-related process is executed again, the NAS layer no longer initiates the underlying layer to transition to the radio resource control connected RRC_CONNECTED state.

In one embodiment, performing the NAS-related process includes: performing a corresponding operation when the AS layer receives from the NAS layer a request to recover a suspended RRC connection and at least one of the following conditions is satisfied:
transmitting small data packets in the RRC inactive state to the network node;
transmitting small data packets in the RRC inactive state to the network node with the RRC Signaling;
transmitting small data packets in the RRC inactive state to the network node without the RRC Signaling;
the SRB2 is recovered or established;
the SRB 1 is suspended;
the SRB2 is suspended;
a Data Radio Bearer DRB of non-small data packets is suspended;
performing the corresponding operation includes at least one of the following:
skipping an access control process;
not initiating the Radio Resource Control Connection Resume (RRC Resume) process;
sending the NAS message through the SRB2;
sending a first message to the network node, where the first message includes indication that the UE is to send non-small data packets or is to send a new NAS message.

In an embodiment, the UE sends the first message to the network node in at least one of the following manners:
a RRCResumeRequest message;
a new RRC message;
a Media Access Control Control Element (MAC CE).

It should be noted that the above-mentioned apparatus provided in the embodiments of the present disclosure can implement all method steps implemented by the foregoing method embodiments, and can achieve the same technical effect, and the parts and beneficial effects which are same as those of the method embodiments are not described in detail herein.

Based on the same inventive concept, an embodiment of the present disclosure further provides an apparatus of processing data transmission, which is applied to a network node, a schematic structural diagram of the apparatus is shown in FIG. 5, and a transceiver 1500 is configured to receive and send data under the control of a processor 1510.

In FIG. 5, a bus architecture may include any number of interconnected buses and bridges. Specifically various circuits such as one or more processors represented by the processor 1510 and a memory represented by a memory 1520 are linked together. The bus architecture may also link together various other circuits, such as peripheral devices, voltage regulators, and power management circuits, etc. which are well known in the art, and therefore are not further described herein. The bus interface provides an interface. The transceiver 1500 may be a plurality of elements, i.e., include a transmitter and a receiver, and provide units for communicating with various other devices on a transmission medium. The transmission medium includes transmission media such as a wireless channel, a wired channel, and an optical cable. The processor 1510 is responsible for managing the bus architecture and general processing, and the memory 1520 may store data used by the processor 1510 when performing an operation.

The processor 1510 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.

The processor 1510 is configured to read a computer program in the memory and perform the following operations:
when the UE is determined to be in a process of sending small data packets in the RRC inactive state, stopping a timer of a periodic RNA; or receiving a second message sent by the UE, where the second message includes indication that the UE is to send non-small data packets or is to send a new NAS message; and sending a response message to the UE.

In an embodiment, determining, by the network node using at least one of the following manners, that the UE is in a process of sending small data packets in the RRC inactive state, includes:
receiving small data packets sent by the UE;
receiving small data packets sent by the UE on a pre-configured resource;
receiving an RRC establishment cause or an RRC recovery cause sent by the UE, the cause is specifically a small data packet;
receiving an indication sent by a network node current serving the UE, wherein the indication indicates that the UE sends the small data packets in the RRC inactive state.

In one embodiment, the response message is used to transition the UE to an RRC_connected state or to recover the SRB2.

It should be noted that the above-mentioned apparatus provided in the embodiments of the present disclosure can implement all method steps implemented by the foregoing method embodiments, and can achieve the same technical effect, and the parts and beneficial effects in this embodiment that are same as those of the method embodiments are not described in detail herein.

Based on the same inventive concept of the foregoing embodiments, an embodiment of the present disclosure further provides an apparatus of processing data transmission, which is applied to a UE, a schematic structural diagram of the apparatus is shown in FIG. 6, and the apparatus 60 of processing data transmission includes a first processing unit 601 and a second processing unit 602.

The first processing unit 601 is configured to send, when being in a radio resource control (RRC) inactive state, small data packets to a network node.

The second processing unit 602 is configured to perform a RRC-related process and/or a Non-Access Stratum (NAS)-related process in a process of sending the small data packets to the network node.

In one embodiment, the second processing unit 602 is specifically configured to not initiate a periodic Radio Access Network Notification Area (RNA).

In one embodiment, not initiating the periodic RNA is implemented in at least one of the following manners:
when a radio resource control connection resume request RRCResumeRequest message is sent and small data packets are sent in the RRC inactive state to the network node, the UE stops a timer of the periodic RNA;
when information fed back by an underlying layer of the UE indicates that a process of sending the small data packets to the network node by the UE in the RRC inactive state has succeeded, the UE stops the timer of the periodic RNA;
when the timer of the periodic RNA expires and at least one of following situations is satisfied, the UE does not trigger the periodic RNA:
   in the RRC inactive state, sending small data packets to the network node;
   in the RRC inactive state, sending small data packets to the network node with the RRC signaling;
   in the RRC inactive state, sending small data packets to the network node without the RRC signaling;
   a signaling radio bearer SRB 1 is recovered;
   a signaling radio bearer SRB 2 is recovered.

In an embodiment, the Non-Access Stratum (NAS)-related process includes: a RRC layer of the UE transfers a related indication to a NAS layer of the UE, and the related indication includes at least one of the following:
in the RRC inactive state, sending small data packets to the network node;
in the RRC inactive state, sending small data packets to the network node with the RRC signaling;
in the RRC inactive state, sending small data packets to the network node without the RRC signaling;
the SRB 1 is recovered;
the SRB 2 is recovered;
an air interface connection is recovered.

In one embodiment, after the RRC layer of the UE transfers the related indication to the NAS layer of the UE, when the NAS-related process is executed again, the NAS layer no longer initiates the underlying layer to transition to the radio resource control connected RRC_CONNECTED state.

In an embodiment, the second processing unit 602 is specifically configured to perform a corresponding operation when the AS layer receives from the NAS layer a request to recover a suspended RRC connection and at least one of the following conditions is satisfied:
transmitting small data packets in the RRC inactive state to the network node;
transmitting small data packets in the RRC inactive state to the network node with the RRC Signaling;
transmitting small data packets in the RRC inactive state to the network node without the RRC Signaling;
the SRB2 is recovered or established;
the SRB 1 is suspended;
the SRB2 is suspended;
a Data Radio Bearer DRB of non-small data packets is suspended;
performing the corresponding operation includes at least one of the following:
skipping an access control process;
not initiating the Radio Resource Control Connection Resume (RRC Resume) process;
sending the NAS message through the SRB2;
sending a first message to the network node, where the first message includes indication that the UE is to send non-small data packets or is to send a new NAS message.

In an embodiment, the UE sends the first message to the network node in at least one of the following manners:
a RRCResumeRequest message;
a new RRC message;
a Media Access Control Control Element (MAC CE).

It should be noted that the above-mentioned apparatus provided in the embodiments of the present disclosure can implement all method steps implemented by the foregoing method embodiments, and can achieve the same technical effect, and the parts and beneficial effects in this embodiment that are same as those of the method embodiments are not described in detail herein.

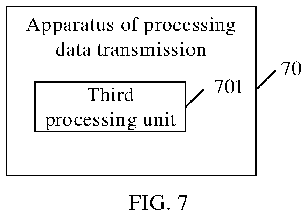

Based on the same inventive concept of the foregoing embodiments, an embodiment of the present disclosure further provides an apparatus of processing data transmission, which is applied to a network node, a schematic structural diagram of the apparatus is shown in FIG. 7, and a third processing unit 701 is included in the apparatus 70 of processing data transmission.

The third processing unit 701 is configured to, when the UE is determined to be in a process of sending small data packets in the RRC inactive state, stop a timer of a periodic RNA; or the third processing unit 701 is configured to receive a second message sent by the UE, where the second message includes indication that the UE is to send non-small data packets or is to send a new NAS message; and send a response message to the UE.

In an embodiment, the network node determines, using at least one of the following manners, that the UE is in a process of sending small data packets in the RRC inactive state:
receiving small data packets sent by the UE;
receiving small data packets sent by the UE on a pre-configured resource;
receiving an RRC establishment cause or an RRC recovery cause sent by the UE, the cause is specifically a small data packet;
receiving an indication sent by a network node current serving the UE, wherein the indication indicates that the UE sends the small data packets in the RRC inactive state.

In one embodiment, the response message is used to transition the UE to an RRC_connected state or to recover the SRB2.

It should be noted that the above-mentioned apparatus provided in the embodiments of the present disclosure can implement all method steps implemented by the foregoing method embodiments, and can achieve the same technical effect, and the parts and beneficial effects in this embodiment that are same as those of the method embodiments are not described in detail herein.

It should be noted that, a division of units in this embodiment of the present disclosure is schematic, but is merely a logical function division, and there may be another division manner in actual implementation. In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a processor-readable storage medium. Based on this understanding, all or part, which contributes to the prior art, of the technical solutions of the present disclosure, or all or part of the technical solutions can be embodied in the form of a software product, and the computer software product is stored in a storage medium, and includes several instructions for enabling a computer device (which may be a personal computer, a server, or a network device, etc.) or a processor to perform all or part of the steps of the method according to various embodiments of the present disclosure. The foregoing storage medium includes various media that can store program codes, such as a USB flash disk, a mobile hard disk, a Read-Only Memory (ROM), a Random Access Memory (RAM), a magnetic disk, or an optical disk.

Based on the same inventive concept, an embodiment of the present disclosure further provides a processor-readable storage medium storing a computer program, where the computer program is configured to implement the steps of any one of the methods of processing data transmission provided in any embodiment or any optional embodiment of the present disclosure when the computer program is executed by the processor.

The processor-readable storage medium may be any usable medium or data storage device accessible by the processor, and includes, but is not limited to, a magnetic memory (such as a floppy disk, a hard disk, a magnetic tape, a magneto-optical disk (MO), etc.), an optical memory (such as CD, DVD, BD, HVD, etc.), and a semiconductor memory (for example, a ROM, an EPROM, an EEPROM, a non-volatile memory (NAND Flash), a solid state disk (SSD)), etc.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware. Moreover, the present disclosure may take the form of a computer program product implemented on one or more computer-usable storage media (including but not limited to a disk memory and an optical memory, etc.) including computer-usable program codes.

The present disclosure is described with reference to a flowchart and/or a block diagram of a method, a device (system), and a computer program product according to some embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine such that instructions executed by a processor of the computer or other programmable data processing device generate means for implementing functions specified in one or more flows of the flowchart and/or one or more blocks of the block diagram.

These processor-executable instructions may also be stored in a processor-readable memory that can direct a computer or other programmable data processing device to operate in a particular manner, such that the instructions stored in the processor-readable memory produce a product that includes an instruction means that implements the functions specified in one or more flows of the flowchart and/or one or more blocks of the block diagram.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowchart and/or one or more blocks of the block diagram.

Obviously, a person skilled in the art may make various modifications and variations to the present disclosure without departing from the spirit and scope of the present disclosure. Thus, if these modifications and variations of the present disclosure fall within the scope of the claims of the present disclosure and the equivalent technologies thereof, the present disclosure is also intended to include these modifications and variations.

## Claims

1. A method of processing data transmission, the method being performed by a User Equipment (UE), the method comprising:
sending small data packets to a network node when the UE is in a Radio Resource Control (RRC) inactive state;
performing a RRC-related process and/or a Non-Access Stratum (NAS)-related process during sending the small data packets to the network node.

2. The method according to claim 1, wherein performing the RRC-related process comprises:
not initiating a periodic Radio Access Network Notification Area (RNA).

3. The method according to claim 1 or 2, wherein performing the RRC-related process during sending the small data packets to the network node comprises:
during sending the small data packets to the network node, when a Radio Resource Control Connection Resume Request (RRCResumeRequest) message is sent, and/or, when information fed back by an underlying layer of the UE indicates that sending the small data packets to the network node by the UE in the RRC inactive state has succeeded, stopping a timer of the periodic RNA.

4. The method according to claim 1 or 2, wherein performing the RRC-related process during sending the small data packets to the network node comprises:
during sending the small data packets to the network node, when a timer of the periodic RNA expires and a Signaling Radio Bearer (SRB) is recovered, not initiating the periodic RNA, wherein the Signaling Radio Bearer (SRB) comprises at least one of SRB 1 and SRB2; or,
during sending the small data packets to the network node, when a timer of the periodic RNA expires, not initiating the periodic RNA.

5. The method according to claim 1, wherein performing the NAS-related process during sending the small data packets to the network node comprises:
transferring a related indication to a NAS layer of the UE by a RRC layer during sending the small data packets to the network node, wherein the related indication comprises one or more of following:
sending the small data packets to the network node in the RRC inactive state;
that a Signaling Radio Bearer 1 (SRB 1) is recovered;
that a Signaling Radio Bearer 2 (SRB2) is recovered;
that an air interface connection is recovered.

6. The method according to claim 5, wherein the method further comprises:
after the RRC layer of the UE transfers the related indication to the NAS layer of the UE, when the NAS-related process is executed again, no longer initiating an underlying layer by the NAS layer to transition to a Radio Resource Control Connected (RRC_CONNECTED) state.

7. The method according to claim 1, wherein performing the NAS-related process during sending the small data packets to the network node comprises:
during sending the small data packets to the network node, if an Access Stratum (AS) layer of the UE receives a request or a message sent by the NAS layer and a specified condition is met, performing following:
skipping an access control process;
not initiating a Radio Resource Control Connection Resume (RRC Resume) process;
sending a NAS message by a Signaling Radio Bearer 2 (SRB2);
sending a first message to the network node, wherein the first message indicates that the UE has non-small data packets to send or has a new NAS message to be sent;
wherein, the specified condition comprises one or more of following:
the SRB2 is recovered or established;
the SRB1 is suspended;
the SRB 2 is suspended;
a Data Radio Bearer (DRB) of the non-small data packets is suspended.

8. The method according to claim 7, wherein the first message comprises at least one of:
the RRCResumeRequest message, a newly defined RRC message, or a Media Access Control Control Element (MAC CE).

9. The method according to claim 1, wherein sending the small data packets to the network node when the UE is in the RRC inactive state comprises:
sending the small data packets to the network node in the RRC inactive state with a RRC signaling; or
sending the small data packets to the network node in the RRC inactive state without a RRC signaling.

10. A method of processing data transmission, the method being performed by a network node, the method comprising:
when the network node determines that a User Equipment (UE) is in a process of sending small data packets in a Radio Resource Control (RRC) inactive state, stopping a timer of a periodic Radio Access Network Notification Area (RNA); or
receiving a second message sent by the UE, wherein the second message comprises an indication that the UE is to send non-small data packets or is to send a new Non-Access Stratum (NAS) message; and sending a response message to the UE.

11. The method according to claim 10, wherein the network node determines that the UE is in the process of sending the small data packets in the RRC inactive state, in at least one of following manners:
receiving the small data packets sent by the UE;
receiving the small data packets sent by the UE on a pre-configured resource;
receiving an RRC establishment cause or an RRC recovery cause sent by the UE, the cause being the small data packets;
receiving an indication sent by a network node current serving the UE, wherein the indication indicates that the UE sends the small data packets in the RRC inactive state.

12. The method according to claim 10, wherein the response message is configured to enable the UE to transition to an RRC connected state or to recover a Signaling Radio Bearer 2 (SRB2).

13. An apparatus of processing data transmission, applied to a User Equipment (UE), the apparatus comprising:
a memory, a transceiver, and a processor, wherein the memory is configured to store a computer program, the transceiver is configured to send and receive data under control of the processor; and the processor is configured to read the computer program in the memory and execute following:
sending small data packets to a network node when the UE is in a Radio Resource Control (RRC) inactive state;
performing a RRC-related process and/or a Non-Access Stratum (NAS)-related process during sending the small data packets to the network node.

14. The apparatus according to claim 13, wherein performing the RRC-related process comprises:
not initiating a periodic Radio Access Network Notification Area (RNA).

15. The apparatus according to claim 13 or 14, wherein performing the RRC-related process during sending the small data packets to the network node comprises:
during sending the small data packets to the network node, when a Radio Resource Control Connection Resume Request (RRCResumeRequest) message is sent, and/or, when information fed back by an underlying layer of the UE indicates that sending the small data packets to the network node by the UE in the RRC inactive state has succeeded, stopping a timer of the periodic RNA.

16. The apparatus according to claim 13 or 14, wherein performing the RRC-related process during sending the small data packets to the network node comprises:
during sending the small data packets to the network node, when a timer of the periodic RNA expires and a Signaling Radio Bearer (SRB) is recovered, not initiating the periodic RNA, wherein the Signaling Radio Bearer (SRB) comprises at least one of SRB 1 and SRB2; or,
during sending the small data packets to the network node, when a timer of the periodic RNA expires, not initiating the periodic RNA.

17. The apparatus according to claim 13, wherein performing the NAS-related process during sending the small data packets to the network node comprises:
transferring a related indication to a NAS layer of the UE by a RRC layer during sending the small data packets to the network node, wherein the related indication comprises one or more of following:
sending the small data packets to the network node in the RRC inactive state;
that a Signaling Radio Bearer 1 (SRB 1) is recovered;
that a Signaling Radio Bearer 2 (SRB2) is recovered;
that an air interface connection is recovered.

18. The apparatus according to claim 17, wherein after the RRC layer of the UE transfers the related indication to the NAS layer of the UE, when the NAS-related process is executed again, the NAS layer of the UE no longer initiates an underlying layer to transition to a Radio Resource Control Connected (RRC_CONNECTED) state.

19. The apparatus according to claim 13, wherein performing the NAS-related process during sending the small data packets to the network node comprises:
during sending the small data packets to the network node, if an Access Stratum (AS) layer of the UE receives a request or a message sent by the NAS layer and a specified condition is met, performing following:
skipping an access control process;
not initiating a Radio Resource Control Connection Resume (RRC Resume) process;
sending a NAS message by a Signaling Radio Bearer 2 (SRB2);
sending a first message to the network node, wherein the first message indicates that the UE has non-small data packets to send or has a new NAS message to be sent;
wherein, the specified condition comprises one or more of following:
the SRB2 is recovered or established;
the SRB1 is suspended;
the SRB 2 is suspended;
a Data Radio Bearer (DRB) of the non-small data packets is suspended.

20. The apparatus according to claim 19, wherein the first message comprises at least one of:
the RRCResumeRequest message, a newly defined RRC message, or a Media Access Control Control Element (MAC CE).

21. The apparatus according to claim 13, wherein sending the small data packets to the network node when the UE is in the RRC inactive state comprises:
sending the small data packets to the network node in the RRC inactive state with a RRC signaling; or
sending the small data packets to the network node in the RRC inactive state without a RRC signaling.

22. An apparatus of processing data transmission, applied to a network node, the apparatus comprising:
a memory, a transceiver, and a processor, wherein the memory is configured to store a computer program, the transceiver is configured to send and receive data under control of the processor; and the processor is configured to read the computer program in the memory and execute following:
when the network node determines that a User Equipment (UE) is in a process of sending small data packets in a Radio Resource Control (RRC) inactive state, stopping a timer of a periodic Radio Access Network Notification Area (RNA); or
receiving a second message sent by the UE, wherein the second message comprises an indication that the UE is to send non-small data packets or is to send a new Non-Access Stratum (NAS) message; and sending a response message to the UE.

23. The apparatus according to claim 22, wherein the network node determines that the UE is in the process of sending the small data packets in the RRC inactive state, in at least one of following manners:
receiving the small data packets sent by the LTE;
receiving the small data packets sent by the UE on a pre-configured resource;
receiving an RRC establishment cause or an RRC recovery cause sent by the UE, the cause being the small data packets;
receiving an indication sent by a network node current serving the UE, wherein the indication indicates that the UE sends the small data packets in the RRC inactive state.

24. The apparatus according to claim 22, wherein the response message is configured to enable the UE to transition to an RRC connected state or to recover a Signaling Radio Bearer 2 (SRB2).

25. An apparatus of processing data transmission, applied to a User Equipment (UE), the apparatus comprising:
a first processing unit, configured to send small data packets to a network node when the UE is in a Radio Resource Control (RRC) inactive state; and
a second processing unit, configured to perform a RRC-related process and/or a Non-Access Stratum (NAS)-related process during sending the small data packets to the network node.

26. An apparatus of processing data transmission, applied to a network node, the apparatus comprising:
a third processing unit, configured to, when the network node determines that a User Equipment (UE) is in a process of sending small data packets in a Radio Resource Control (RRC) inactive state, stop a timer of a periodic Radio Access Network Notification Area (RNA); or
a third processing unit, configured to receive a second message sent by the UE, wherein the second message comprises an indication that the UE is to send non-small data packets or is to send a new Non-Access Stratum (NAS) message; and send a response message to the UE.

27. A processor-readable storage medium, wherein the processor-readable storage medium stores a computer program, and the computer program is configured to cause a processor to execute the method according to any one of claims 1-9 or any one of claims 10-12.
